(19) **Europäisches Patentamt**

**European Patent Office**

**Office européen des brevets**

(11) **EP 1 023 181 B1**

(12) **EUROPÄISCHE PATENTSCHRIFT**

(45) Veröffentlichungstag und Bekanntmachung des Hinweises auf die Patenterteilung:
**22.08.2001 Patentblatt 2001/34**

(51) Int Cl.⁷: **B41J 29/367**, B41J 31/09, B41M 5/10

(21) Anmeldenummer: **98948993.5**

(22) Anmeldetag: **29.09.1998**

(86) Internationale Anmeldenummer:
**PCT/EP98/06172**

(87) Internationale Veröffentlichungsnummer:
**WO 99/19149 (22.04.1999 Gazette 1999/16)**

(54) **MEHRSCHICHTIGES, FLEXIBLES ÜBERTRAGUNGSBAND**

MULTI-LAYER, FLEXIBLE TRANSFER TAPE

RUBAN TRANSFERT MULTICOUCHE SOUPLE

(84) Benannte Vertragsstaaten:
**AT BE CH CY DE DK ES FI FR GB GR IE IT LI LU MC NL PT SE**

(30) Priorität: **10.10.1997 DE 19744957**

(43) Veröffentlichungstag der Anmeldung:
**02.08.2000 Patentblatt 2000/31**

(73) Patentinhaber: **Pritt Produktionsgesellschaft mbH**
**30453 Hannover (DE)**

(72) Erfinder:
• **WEISSMANN, Karl-Heinz**
**D-30173 Hannover (DE)**
• **BUCHHOLZ, Martina**
**D-30826 Garbsen (DE)**
• **GIERSEMEHL, Wolfgang**
**D-31275 Lehrte (DE)**
• **BAUERSACHS, Wolfgang**
**D-30900 Wedemark (DE)**

(74) Vertreter: **Mathes, Nikolaus, Dr.**
**Henkel KGaA,**
**Patente (VTP)**
**40191 Düsseldorf (DE)**

(56) Entgegenhaltungen:
**EP-A- 0 318 804          EP-A- 0 479 221**
**DE-C- 19 617 850**

**Beschreibung**

Die Erfindung betrifft ein mehrschichtiges, flexibles Übertragungsband mit einem Hilfsträger und einer Haftkleberschicht, wobei sich zwischen dem Hilfsträger und der Haftkleberschicht mindestens eine bindemittelhaltige pigmentierte Übertragungsschicht befindet, die zur Haftkleberschicht eine stärkere Haftung als zum Hilfsträger aufweist.

Ein Übertragungsband der oben beschriebenen Art geht beispielsweise aus der DE 196 17 850 C1 hervor. Daraus ist ein Übertragungsband bekannt, bei dem auf einem üblichen Hilfsträger eine pigmentierte, insbesondere weißpigmentierte Übertragungsschicht, darauf eine weitere pigmentierte Übertragungsschicht, die ein nicht-weißes Pigment enthält, und darauf die Haftkleberschicht angeordnet ist. Dieses Band zeigt eine besonders günstige Deckfähigkeit der Übertragungsschicht, ohne daß der "Weißgrad" wesentlich beeinträchtigt wird. Das bekannte Band wird mit Vorteil in aufgerollter Form in Handgeräten verwendet, um damit die Übertragungsschicht einfach, schnell und gleichmäßig auf ein Substrat aufzutragen, hierdurch fehlerhafte Schriftzeichen bei Texten oder Abbildungen zu überdecken und anschließend Korrekturen vorzunehmen. Die aufgetragene Übertragungsschicht kann dann, beispielsweise mit einem Füllhalter oder Kugelschreiber, erneut beschriftet werden. In Einzelfällen zeigt sich bei den angesprochenen Korrekturen, daß die Farbstoffe der abgedeckten Schriftzeichen, insbesondere durch Feuchtigkeitseinfluß, an die Oberfläche der aufgetragenen Abdeckschicht migrieren und das abgedeckte Schriftzeichen wieder sichtbar machen.

Der Erfindung lag daher die Aufgabe zugrunde, das eingangs bezeichnete Übertragungsband so weiterzubilden, daß das angesprochene "Durchbluten" abgedeckter Schriftzeichen behoben wird, ohne daß die wünschenswerten Eigenschaften, insbesondere die Deckfähigkeit der Übertragungsschicht beeinträchtigt werden.

Erfindungsgemäß wird diese Aufgabe dadurch gelöst, daß das Übertragungsband zwei bindemittelhaltige pigmentierte Übertragungsschichten aufweist, wobei eine der pigmentierten Übertragungsschichten kationaktiv und die andere pigmentierte Übertragungsschicht anionaktiv eingestellt ist.

Vorteilhafte Ausgestaltungen der vorliegenden Erfindung ergeben sich aus den Unteransprüchen. Bevorzugt ist es danach, daß die beiden Übertragungsschichten eine Stärke von etwa 5 bis 25 g/m$^2$ und eine Gesamtstärke von etwa 15 bis 30 g/m$^2$ aufweisen. Die separate Klebeschicht weist vorzugsweise eine Stärke von etwa 1 bis 5 g/m$^2$, insbesondere etwa 2 bis 4 g/m$^2$, auf. Besonders gute Effekte werden erzielt, wenn in der anionaktiv eingestellten Übertragungsschicht und/oder in der Klebeschicht ein feinteiliges Metallpulver, insbesondere feinteiliges Aluminium, enthalten ist. Vorzugsweise liegt das feinteilige Metallpulver in Plättchenform vor. Hierbei ist es von Vorteil, wenn die plättchenförmigen Aluminiumteilchen eine Dicke von etwa 3 bis 10 µm und einen Durchmesser von etwa 4 bis 17 µm aufweisen. Die Menge an feinteiligem Metallpulver beträgt, bezogen auf die jeweilige trockene Schicht, etwa 0,1 bis 3,5 Gew.-%. Besonders günstige Effekte werden erzielt, wenn sich die anionaktiv eingestellte Übertragungsschicht zwischen der kationaktiv eingestellten Übertragungsschicht und der Klebeschicht befindet. Wenn das feinteilige Metallpulver in der Klebeschicht vorliegt, dann spielt die Folge der anionaktiv und kationaktiv eingestellten Übertragungsschichten keine Rolle. In Einzelfällen ist es von besonderem Vorteil, wenn, gesehen vom Hilfsträger aus, zunächst die kationaktiv eingestellte Übertragungsschichten angeordnet ist und darauf eine klebende anionisch eingestellte Übertragungsschicht ohne eine weitere Haftkleberschicht folgt, wobei insbesondere die klebende, anionisch eingestellte Übertragungsschicht feinteiliges Metall, insbesondere feinteiliges Aluminium, enthält.

Der Grundgedanke der vorliegenden Erfindung besteht darin, daß, unabhängig von der Folge in der gesamten Schichtstruktur des Übertragungsbandes, dieses eine kationaktiv eingestellte und zusätzlich eine anionaktiv eingestellte Übertragungsschicht umfaßt. Die Begriffe "anionaktiv" bzw. "kationaktiv" eingestellt sind für den Fachmann ohne weiteres verständlich. Die Übertragungsschichten werden vorzugsweise anhand von Bindemittel dispersionen hergestellt, demzufolge von Dispersionen mit festen kleinen Polymerteilchen, insbesondere in wäßriger Form. Dabei können im Handel erhältlich kationaktive bzw. anionaktive wäßrige Dispersionen herangezogen werden, beispielsweise als kationaktive wäßrige Dispersion Acronal® 280 KD (von der Firma BASF AG), Butonal® LS 170 K (von der Firma BASF AG), Jagotex® AL 2463 (von der Firma Jäger) oder als kationaktive Lösung z.B. Worleécryl® (kationische Reinacrylat-Lösung, klare bis leicht milchige Lösung, einerseits 25%ig in Wasser (7712 W) und andererseits 40 %ig in Wasser / Isopropanol (40:20) (7712), pH-Wert jeweils 5) (von der Firma Worleé Chemie GmbH, Hamburg) und als anionaktive wäßrige Dispersion Acronal® S 725 bzw. S 726 (Butylacrylat/Styrol-Copolymer) (von der Firma BASF AG), Acronal® V 205 (von der Firma BASF AG), Styrofan® D 422 und Propiofan® 6D (von der Firma BASF AG). Die angesprochenen Aktivitäten ergeben sich aus dem jeweils bei der Emulsionspolymerisation herangezogenen Tensid. Im Falle einer kationaktiven Dispersion werden zur Stabilisierung bei der Emulsionspolymerisation anionische Tenside eingesetzt, die hydrophile bzw. polare Gruppen in Form von Sulfonat-($-SO_3^-$), Sulfat-($-O-SO_3^-$) oder eine Carboxylatgruppe ($-COO^-$) enthalten. Diese Gruppen weisen nach außen, betrachtet von den dispergierten Polymerteilchen. Im Falle der kationischen Dispersionen werden bei der Emulsionspolymerisation kationische Tenside eingesetzt, die als hydrophile Gruppen nahezu ausnahmslos ein quartäres Ammoniumion ($-N^+(R_3)$) enthalten. Dem Fachmann reichen diese Informationen aus, unter den handelsüblichen ionisch eingestellten wäßrigen Dispersionen die geeigneten auszuwählen, um die Ziele der Erfindung zu verwirklichen. Hierzu sei verwiesen auf Dr. H. Stache "Tensid-Taschenbuch", Carl Hanser Verlag München, Wien, 1979, S. 2/3 sowie Römpps Chemie-Lexikon, 7. Aufl., Georg Thieme Verlag, 1992, Bd. 6, S. 4495, r. Sp., bis S. 4499, 1. Sp.

Im Ergebnis werden demzufolge bei der Herstellung der erfindungsgemäß auszubildenden Übertragungsschichten vorzugsweise die angesprochenen wäßrigen Dispersionen bzw. Lösungen eingesetzt. Deren Aufzählung erhebt keinen Anspruch auf Vollständigkeit und insbesondere keine Einschränkung in ihrer Auswahl. Vielmehr ist es dem Fachmann ohne weiteres ersichtlich, daß auch andere Bindemittel in Frage kommen können, zumal in der Art des Bindemittels nicht das Wesen der Erfindung zu sehen ist, sondern allein die kationaktive bzw. anionaktive Einstellung der Übertragungsschicht. Die Konzentration des Bindemittels in der Dispersion ist nicht wesentlich. Als grobe Richtlinie kann gelten, daß sie zwischen etwa 25 bis 70 Gew.-% liegt, wobei der Bereich von etwa 40 bis 60 Gew.-% bevorzugt wird. Die wäßrige Dispersion zur Ausbildung der Übertragungsschichten wird vorzugsweise in einer Menge von etwa 15 bis 35 g/m$^2$(Trockengewicht) und ganz besonders bevorzugt zwischen etwa 18 bis 25 g/m$^2$ auf den Hilfsträger aufgetragen, wobei sich diese Menge auf die Gesamtmenge beider Übertragungsschichten, d.h. der kationaktiv und anionaktiv eingestellten Übertragungsschicht bezieht.

Bei der Herstellung der verschiedenen Schichten können geläufige Additive, so beispielsweise Entschäumer, Netzmittel und dergleichen eingesetzt werden.

Die Haftkleberschicht kann aus handelsüblichen Haftklebestoffen bestehen, z.B. der Freihoff-Dispersion VP 859/6. Die oben beschriebenen Materialien der einzelnen Schichten des erfindungsgemäßen Übertragungsbandes genügen in der Regel der Grundforderung, daß die Haftspannung zwischen dem Hilfsträger und den angesprochenen Übertragungsschichten kleiner ist als zwischen diesen und der Haftkleberschicht (s. DE 196 17 850 C1).

Technologisch läßt sich die Erfindung wie folgt erklären: Die meisten Farbstoffe in Schreibflüssigkeiten sind synthetische Farbstoffe auf der Grundlage aromatischer bzw. heterocyclischer Verbindungen. Die Farbstoffe sind entweder ionogene (z.B. alle wasserlöslichen Farbstoffe) und nicht-ionogene Verbindungen (z.B. Dispersionsfarbstoffe). Bei ersteren unterscheidet man zwischen anionischen und kationischen Farbstoffen. Die anionischen Farbstoffe haben ein negativ geladenes, die kationischen Farbstoffe ein positiv geladenes Farbstoffion, weshalb früher generell saure und basische Farbstoffe unterschieden wurden. Es hat sich gezeigt, daß es die vorliegende Erfindung, unabhängig von der Art des jeweiligen Schriftzugs, d.h. ob einen anionischen oder kationischen Farbstoff enthaltend, es bei dem Abdecken beispielsweise eines fehlerhaften Schriftzugs gewährleistet, daß das nachteilige Migrieren der Farbstoffe durch die abdeckende Schicht ausgeschlossen wird. Befindet sich in dem Schriftzeichen ein anionischer Farbstoff, dann führt das dazu, daß die kationaktiv eingestellte Übertragungsschicht des erfindungsgemäßen Übertragungsbandes eine Migration blockiert. Im Falle eines kationischen Farbstoffs wird dieser Effekt des Blockierens durch die anionaktiv eingestellte Deckschicht bewirkt (kationischer Farbstoff bindet an die anionaktiv eingestellte Schicht, etc.). Hier migriert der Farbstoff im übrigen nicht durch das Polymer selbst, sondern durch in der Übertragungsschicht vorliegende Mikrohohlräume. Wenn der Farbstoff durch diese Hohlräume migriert, führt das zwangsläufig dazu, daß er mit den aktiven und nach außen gerichteten Teilen des sich auf der Oberfläche der Polymerteilchen befindenden Tenside in Kontakt tritt und durch entsprechende Wechselwirkung gebunden wird.

Die mit der Erfindung erzielbaren Vorteile lassen sich wie folgt darstellen: Das eingangs beschriebene "Durchbluten" abgedeckter Schriftzeichen wird in der gewünschten Weise behoben, ohne daß die wünschenswerten Eigenschaften sowie die Deckfähigkeit der Übertragungsschicht beeinträchtigt werden. Es ist eine dauerhafte Schriftenabdeckung möglich.

Die Erfindung soll nachfolgend anhand von Beispielen noch näher erläutert werden:

Beispiel 1

Es wurden die folgenden wäßrigen Dispersionen zur Ausbildung der verschiedenen Schichten des erfindungsgemäßen Übertragungsbandes zusammengestellt:

Dispersion zur Herstellung der kationaktiv eingestellten Übertragungsschicht

| | |
|---|---|
| Wäßrige Acrylatlösung (25%ig in Wasser / Handelsprodukt Worleécryl® 7712 W der Firma Worleé Chemie GmbH, Hamburg) | 35,0 Gew.-Teile |
| Wasser | 15,3 Gew.-Teile |
| Alkylammoniumsalz von Polycarbonsäuren (Handelsprodukt Lactimon® WS der Byk Chemie GmbH) | 1,0 Gew.-Teile |
| Entschäumer (hydrophobe, silikonartige Komponenten in Mineralöl) (Handelsprodukt Byk® 034) | 0,2 Gew.-Teile |

(fortgesetzt)

| | |
|---|---|
| amorphe Kieselsäure (Handelsprodukt Syloid® 244 der Firma Grace, USA) | 5,0 Gew.-Teile |
| Titandioxid (Rutil) (Handelsprodukt Finntitan RDD der Firma Kemira, Finnland) | 43,5 Gew.-Teile |
| | 100,0 Gew.-Teile |

Dispersion zur Herstellung der anionaktiv eingestellten Übertragungsschicht

| | |
|---|---|
| Wäßrige Copolymerdispersion von n-Butylacrylat und Styrol (45%ig) (Handelsprodukt Acronal® S 725 der Firma BASF AG) | 36,0 Gew.-Teile |
| Wäßriges carboxylgruppenhaltiges Acrylsäureestercopolymer (69%ig) (Handelsprodukt Acronal® V 205 der Firma BASF AG) | 4,0 Gew.-Teile |
| Wäßriges Polyvinylpropionat (50%ig) (Handelsprodukt Propiofan® 6 D der Firma BASF AG) | 1,0 Gew.-Teilo |
| Wasser | 4,5 Gew.-Teile |
| Natriumsalz einer Polyacrylsäure (40%ig in Wasser) (Handelsprodukt Indunal® NKS der Firma Indulor-Chemie) | 0,5 Gew.-Teile |
| Na-Salz eines Sulfobernsteinsäureesters (Handelsprodukt Lumiten® IRA der Firma BASF AG) | 1,0 Gew.-Teile |
| Gemisch aus Fettsäure, Polyglykolderivaten und Kohlenwasserstoffen (Handelsprodukt Dehydran® 1227) | 1,0 Gew.-Teile |
| Titandioxid (Rutil) (Handelsprodukt Finntitan RDD der Firma Kemira, Finnland) | 50,0 Gew.-Teile |
| Natriumaluminiumsilikat (Handelsprodukt Ketjensil SM 405 der Firma Akzo-Chemie) | 2,0 Gew.-Teile |
| | 100,0 Gew.-Teile |

Zur Ausbildung der Haftkleberschicht

| | |
|---|---|
| Wäßrige Acrylsäureester-Dispersion (50%ig) (Freihoff-Dispersion VP 859/6 der Firma Freihoff Chemie) | 65,0 Gew.-Teile |
| 25%ige wäßrige Ammoniaklösung | 1,5 Gew.-Teile |
| Na-Salz eines Sulfobernsteinsäureesters (Handelsprodukt Lumiten® IRA der Firma BASF AG) | 1,0 Gew.-Teile |
| Wasser | 32,5 Gew.-Teile |
| | 100,0 Gew.-Teile |

Die vorstehende Dispersion zur Ausbildung der kationaktiv eingestellten Schicht wird mit einer Rakel in einer Menge von 10g/m$^2$ auf einen silikonisierten Papierträger einer Stärke von 50 μm aufgetragen. Dann wird das Wasser bei etwa 100°C durch Überleiten warmer Luft abgedampft. Anschließend wird die wäßrige Dispersion zur Ausbildung der anionaktiv eingestellten Schicht in derselben Weise mit einer Rakel auf die Oberfläche der bereits ausgebildeten kationaktiv eingestellten Schicht aufgetragen bzw. das Wasser daraus abgedampft. Danach folgt die Ausbildung der Haftkleberschicht auf diesem Schichtverbund, indem von der vorstehend bezeichneten wäßrigen Dispersion ein Auftrag in einer Menge von 5g/m$^2$ erfolgt. Das Abdampfen von Wasser erfolgt in der vorstehend beschriebenen Weise.

Beispiel 2

Das Beispiel 1 wird mit folgender Abwandlung wiederholt, indem zur Ausbildung der anionisch eingestellten Schicht folgende Rezeptur herangezogen wird.

| | |
|---|---|
| Wäßrigc Copolymerdispersion von n-Butylacrylat und Styrol (45%ig) (Handelsprodukt Acronal® S 725 der Firma BASF AG) | 30,0 Gew.-Teile |
| Wäßriges carboxylgruppenhaltiges Acrylsäureestercopolymer (69%ig) (Handelsprodukt Acronal® V 205 der Firma BASF AG) | 10,0 Gew.-Teile |
| Wäßriges Polyvinylpropionat (50%ig) (Handelsprodukt Propiofan® 6 D der Firma BASF AG) | 1,0 Gew.-Teile |
| Wasser | 4,0 Gew.-Teile |
| Natriumsalz einer Polyacrylsäure (40%ig in Wasser) (Handelsprodukt Indunal® NKS der Firma Indulor-Chemie) | 0,5 Gew.-Teile |
| Na-Salz eines Sulfobernsteinsäureesters (Handelsprodukt Lumiten® IRA der Firma BASF AG) | 1,0 Gew.-Teile |
| Gemisch aus Fettsäure, Polyglykolderivaten und Kohlenwasserstoffen (Handelsprodukt Dehydran® 1227) | 1,0 Gew.-Teile |
| Titandioxid (Rutil) (Handelsprodukt Finntitan RDD der Firma Kemira, Finnland) | 50,0 Gew.-Teile |
| Natriumaluminiumsilikat (Handelsprodukt Ketjensil® SM 405 der Firma Akzo Chemie) | 2,0 Gew.-Teile |
| Wäßrige Aluminiumpaste (65%ig) (Handelsprodukt Aquasilber LPW 1380 der Firma Schlenk AG) | 0,5 Gew.-Teile |
| | 100,0 Gew.-Teile |

Diese Dispersion wird anstelle der Dispersion des Beispiels 1 eingesetzt, mit der die anionaktiv eingestellte Übertragungsschicht ausgebildet wurde. Die Rezeptur ist derartig zusammengestellt, daß sie Klebrigkeit zeigt, so daß hier die Ausbildung einer Haftkleberschicht, wie nach Beispiel 1 vorgesehen, entfällt. Die Menge des Auftrags beträgt 10 g /m².

Beispiel 3

Das Beispiel 1 wird mit der Abwandlung wiederholt, daß anstelle der darin beschriebenen Dispersion zur Ausbildung der Haftkleberschicht folgende Rezeptur herangezogen wird:

| | |
|---|---|
| Wäßrige Acrylsäureester-Dispersion (50%ig) (Freihoff-Dispersion VP 859/6 der Firma-Freihoff-Chemie | 65,0 Gew.-Teile |
| Aluminiumpaste (65%ig) (Handelsprodukt Aquasilber LPW 1380 der Firma Schlenk AG) | 2,0 Gew.-Teile |
| 25%ige wäßrige Ammoniaklösung | 1,5 Gew.-Teile |
| Na-Salz eines Sulfobemsteinsäureesters (Handelsprodukt Lumiten® IRA der Firma BASF AG) | 1,0 Gew.-Teile |
| Wasser | 30,5 Gew.-Teile |
| | 100,0 Gew.-Teile |

Diese Rezeptur wird entsprechend der im Beispiel 1 beschriebenen Verfahrensweise mit einer Rakel in einer Menge von 5 g/m² auf die vorher ausgebildete anionisch eingestellte Übertragungsschicht aufgetragen.

**Patentansprüche**

1. Mehrschichtiges, flexibles Übertragungsband mit einem Hilfsträger und einer Haftkleberschicht, wobei sich zwischen dem Hilfsträger und der Haftkleberschicht mindestens eine bindemittelhaltige pigmentierte Übertragungsschicht befindet, die zur Haftkleberschicht eine stärkere Haftung als zum Hilfsträger aufweist, mit den Merkmalen daß das Übertragungsband zwei bindemittelhaltige pigmentierte Übertragungsschichten aufweist, wobei eine der pigmentierten Übertragungsschichten kationaktiv und die andere pigmentierte Übertragungsschicht anionaktiv eingestellt ist.

2. Übertragungsband nach Anspruch 1, dadurch gekennzeichnet, daß die beiden Übertragungsschichten eine Stärke von 5 bis 25 g/m² und eine Gesamtstärke von 15 bis 30 g/m² stark sind.

3. Übertragungsband nach Anspruch 1 oder 2, dadurch gekennzeichnet, daß die Klebeschicht eine Stärke von 1 bis 5 g/m$^2$, insbesondere 2 bis 4 g/m$^2$ aufweist.

4. Übertragungsband nach einem der vorhergehenden Ansprüche, dadurch gekennzeichnet, daß in der anionaktiv eingestellten Übertragungsschicht und/oder in der Klebeschicht ein feinteiliges Metallpulver, insbesondere feinteiliges Aluminium, enthalten ist.

5. Übertragungsband nach Anspruch 4, dadurch gekennzeichnet, daß das feinteilige Metallpulver in Plättchenform vorliegt.

6. Übertragungsband nach Anspruch 5, dadurch gekennzeichnet, daß die plättchenförmigen Aluminiumteilchen eine Dicke von 3 bis 10 μm und einen Durchmesser von 4 bis 17 μm aufweisen.

7. Übertragungsband nach mindestens einem der Ansprüche 4 bis 6, dadurch gekennzeichnet, daß darin die Menge an feinteiligem Metallpulver, bezogen auf die jeweilige trockene Schicht, 0,1 bis 3,5 Gew.-% beträgt.

8. Übertragungsband nach mindestens einem der Ansprüche 1 bis 7, dadurch gekennzeichnet, daß sich die anionaktiv eingestellte Übertragungsschicht zwischen der kationaktiv eingestellten Übertragungsschicht und der Klebeschicht befindet.

9. Übertragungsband nach mindestens einem der vorhergehenden Ansprüche, dadurch gekennzeichnet, daß, gesehen vom Hilfsträger aus, zunächst die kationaktiv eingestellte Übertragungsschicht angeordnet ist und darauf eine klebende anionisch eingestellte Übertragungsschicht ohne eine weitere Haftkleberschicht folgt.

10. Übertragungsband nach Anspruch 9, dadurch gekennzeichnet, daß die klebende, anionisch eingestellte Übertragungsschicht feinteiliges Metall, insbesondere feinteiliges Aluminium, enthält.

## Claims

1. A multilayer flexible transfer tape comprising a backing and a layer of pressure-sensitive adhesive, at least one binder-containing pigmented transfer layer being present between the backing and the layer of pressure-sensitive adhesive and showing greater adhesion to the layer of pressure-sensitive adhesive than to the backing, wherein the transfer tape comprises two binder-containing pigmented transfer layers, one of the pigmented transfer layers being cationic and the other pigmented transfer layer being anionic.

2. A transfer tape as claimed in claim 1, characterised in that the two transfer layers have a thickness of 5 to 25g/m$^2$ and a total thickness of 15 to 30g/m$^2$,

3. A transfer tape as claimed in claim 1 or 2, characterised in that the adhesive layer has a thickness of 1 to 5g/m$^2$ and more preferably in the range from 2 to 4g/m$^2$.

4. A transfer tape as claimed in any of the preceding claims, characterised in that a fine-particle metal powder, more particularly fine-particle aluminium, is present in the anionic transfer layer and/or in the adhesive layer.

5. A transfer tape as claimed in claim 4, characterised in that the fine-particle metal powder is present in the form of platelets.

6. A transfer tape as claimed in claim 5, characterised in that the platelet-like aluminium particles have a thickness of 3 to 10μm and a diameter of 4 to 17μm.

7. A transfer tape as claimed in at least one of claims 4 to 6, characterised in that the quantity of fine-particle metal powder used is between 0.1 and 3.5wt%, based on the particular dry layer.

8. A transfer tape as claimed in at least one of claims 1 to 7, characterised in that the anionic transfer layer is located between the cationic transfer layer and the adhesive layer.

9. A transfer tape as claimed in at least one of the preceding claims, characterised in that, as seen from the backing, the cationic transfer layer is applied first, followed by an adhesive, anionic transfer layer with no further layer of pressure-sensitive adhesive.

10. A transfer tape as claimed in claim 9, characterised in that the adhesive anionic transfer layer in particular contains fine-particle metal, more particularly fine-particle aluminium.


**Revendications**

1. Ruban de transfert souple à plusieurs couches comportant un substrat auxiliaire et une couche d'adhésif sensible à la pression, dans lequel entre le substrat auxiliaire et la couche d'adhésif sensible à la pression se trouve au moins une couche de transfert pigmentée contenant un liant, et présentant une adhérence plus forte à la couche d'adhésif qu'au support auxiliaire,
   avec les caractéristiques que
   le ruban de transfert présente deux couches de transfert pigmentées contenant un liant, l'une des couches de transfert pigmentée étant à réglage cation-actif et l'autre couche de transfert pigmentée étant à réglage anion-actif.

2. Ruban de transfert selon la revendication 1,
   caractérisé en ce que
   les deux couches de transfert ont une épaisseur de 5 à 25 g/m$^2$ et une épaisseur totale de 15 à 30 g/m$^2$.

3. Ruban de transfert selon la revendication 1 ou 2,
   caractérisé en ce que
   la couche adhésive présente une épaisseur de 1 à 5 g/m$^2$, en particulier de 2 à 4 g/m$^2$.

4. Ruban de transfert selon l'une quelconque des revendications précédentes,
   caractérisé en ce que
   dans la couche de transfert à réglage anion-actif et/ou dans la couche d'adhésif se trouve une poudre métallique fine, en particulier de l'aluminium fin.

5. Ruban de transfert selon la revendication 4,
   caractérisé en ce que
   la poudre métallique fine se présente sous forme de plaquettes.

6. Ruban de transfert selon la revendication 5,
   caractérisé en ce que
   les particules d'aluminium en forme de plaquettes présentent une épaisseur de 3 à 10 µm et un diamètre de 4 à 17 µm.

7. Ruban de transfert selon au moins l'une des revendications 4 à 6,
   caractérisé en ce que
   la quantité de poudre métallique fine, par rapport à la couche sèche considérée, s'élève à 0,1 à 3,5 % en poids.

8. Ruban de transfert selon au moins une des revendications 1 à 7,
   caractérisé en ce que
   la couche de transfert à réglage anion-actif se trouve entre la couche de transfert à réglage cation-actif et la couche d'adhésif.

9. Ruban de transfert selon au moins une des revendications précédentes,
   caractérisé en ce que
   du point du vue du substrat auxiliaire, on trouve disposée tout d'abord la couche de transfert à réglage cation-actif suivie par une couche de transfert à réglage anionique adhésive sans autre couche d'adhésif.

10. Ruban de transfert selon la revendication 9,
    caractérisé en ce que
    la couche de transfert adhésive à réglage anionique contient de fines particules de métal, en particulier de fines particules d'aluminium.